(19) Europäisches Patentamt
European Patent Office
Office européen des brevets

(11) EP 1 569 965 B1

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(21) Anmeldenummer: **03780091.9**

(22) Anmeldetag: **01.12.2003**

(51) Int Cl.:
***C08F 2/38*** *(2006.01)*

(86) Internationale Anmeldenummer:
**PCT/EP2003/013489**

(87) Internationale Veröffentlichungsnummer:
**WO 2004/050717 (17.06.2004 Gazette 2004/25)**

(54) **VERFAHREN ZUR RADIKALISCHEN POLYMERISATION IN GEGENWART EINES REGLERS**

METHOD FOR RADICAL POLYMERISATION IN THE PRESENCE OF A CHAIN TRANSFER AGENT

PROCEDE DE POLYMERISATION RADICALE EN PRESENCE D'UN REGULATEUR

(84) Benannte Vertragsstaaten:
**AT BE BG CH CY CZ DE DK EE ES FI FR GB GR HU IE IT LI LU MC NL PT RO SE SI SK TR**

(30) Priorität: **03.12.2002 DE 10256617**

(43) Veröffentlichungstag der Anmeldung:
**07.09.2005 Patentblatt 2005/36**

(73) Patentinhaber: **BASF Aktiengesellschaft**
**67056 Ludwigshafen (DE)**

(72) Erfinder: **GASCHLER, Wolfgang**
**69126 Heidelberg (DE)**

(56) Entgegenhaltungen:
**WO-A-00/63256**
**WO-A-98/16563**
**US-A- 5 408 023**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 569 965 B1

Printed by Jouve, 75001 PARIS (FR)

**Beschreibung**

Die vorliegende Erfindung betrifft ein Verfahren zur radikalischen Polymerisation in Gegenwart eines Reglers.

Polymerisate bzw. Polymere im Sinne dieser Schrift bezeichnen Homo- und Copolymerisate bzw. -Polymere, der Begriff Polymerisationen umfasst ebenso Homo- und Copolymerisationen.

In Polymerisationsreaktionen werden vielfach Reglersubstanzen verwendet, die den Abbruch der Kettenreaktion bewirken und auf diese Weise den Polymerisationsgrad beziehungsweise das mittlere Molekulargewicht des Polymerisates steuern. Weiterhin dienen sie zur Vermeidung von Verzweigungen und damit zur Verringerung der Bildung von unlöslichen Gelanteilen.

In der Literatur werden unterschiedlichste Substanzen als Regler vorgeschlagen. Von kommerzieller Bedeutung sind hierbei Verbindungen mit Thiolgruppen, insbesondere Alkylmercaptane wie n- und tert.-Dodecylmercaptan (siehe z. B. Ullmanns Encyclopedia of Industrial Chemistry, 5th ed. on CD-ROM, Synthetic Rubber 2.1.2). Diese Substanzen sind jedoch in verschiedener Hinsicht von Nachteil, beispielsweise sind sie aufgrund ihres unangenehmen Geruchs sowohl vor als auch während der Polymerisation schlecht zu handhaben. Nachteilig ist auch ihre Auswirkung auf den Eigengeruch des Polymerisates. Dieser lässt sich auch durch aufwendige Desodorierungsmaßnahmen nicht vollständig unterdrücken. Häufig sind diese Regler auch haut- und schleimhautreizend, was ihre Anwendung in Polymerisationsreaktionen zur Herstellung von Polymerisaten für Kosmetika beschränkt.

Verschiedentlich wurden andere Regler z. B. für die Emulsionspolymerisation von Styrol mit Butadien vorgeschlagen. So werden in der DE-A 19 512 999 schwefelhaltige Regler in Kombination mit Kohlenwasserstoffen wie $\alpha$-Methylstyrol-Dimer und Terpinolen als Regler verwendet.

Aus der EP-A 407 059 ist ein Verfahren zur Emulsionspolymerisation von Styrol und Butadien enthaltenden Monomermischungen bekannt, bei dem Mischungen aus Terpinolen in Kombination mit weiteren Kettenübertragungsmitteln eingesetzt werden.

Die ältere deutsche Anmeldung mit dem Aktenzeichen 10148497.6 beschreibt ein Verfahren, in dem Terpinolen und andere Kohlenwasserstoffe, die unter Abstraktion eines Wasserstoffatoms als Kettenübertragungsmittel ein Pentadienyl-Radikal oder ein Phenylallyl-Radikal bilden, sowie das $\alpha$-Methylstyrol-Dimer alleine als Regler eingesetzt werden können.

EP-A 036136 lehrt den Einsatz von Enolethern als Molekulargewichtsregler zur Herstellung von Copolymerisaten von Styrol und/oder dessen Derivaten.

In EP-A 496 925 werden neben den zuvor genannten weitere Regler beschrieben, beispielsweise halogenierte Lösungsmittel wie Chloroform, die wie Mercaptane einen intensiven Geruch aufweisen und toxikologisch bedenklich sind.

Die im Stand der Technik genannten Reglersysteme wie Mercaptane haben verschiedenste Nachteile. Sie sind zum Teil geruchsintensiv, haut- und schleimhautreizend sowie toxikologisch bedenklich. Als Regler eingesetztes Terpinolen bildet ein delokalisiertes bzw. sekundäres Radikal, was sich auf den Reaktionsverlauf geschwindigkeitshemmend auswirkt.

Es bestand daher die Aufgabe, ein Verfahren zur radikalischen Polymerisation unter Einsatz eines Reglersystems zu entwickeln, welches die Nachteile der bisher verwendeten Reglersysteme nicht aufweist.

Weiterhin war ein Ziel, dieses neuartige Verfahren in allen Polymerisationsreaktionen, die radikalisch initiiert werden, verwenden zu können.

Die Aufgabe wurde gelöst durch ein Verfahren zur radikalischen Polymerisation in Gegenwart eines Reglers, in dem man als Regler carbocyclische oder heterocyclische Verbindungen einsetzt, die eine in Allyl- oder Heteroallylstellung beziehungsweise Homoallyl- oder Homoheteroallylstellung befindliche Abgangsgruppe enthalten und die nach radikalischer H-Abstraktion ein aromatisches System unter Abspaltung einer radikalischen Abgangsgruppe ausbilden.

Ferner wurde ein Reglersystem gefunden, dass die Nachteile der im Stand der Technik genannten Reglersysteme nicht aufweist, was vor allem für den Einsatz in Polymerisationsreaktionen zur Herstellung von Polymerisaten für Kosmetika vorteilhaft ist.

Der besondere Vorteil der erfindungsgemäß verwendeten carbocyclischen oder heterocyclischen Reglersysteme liegt darin, dass unter Ausbildung des aromatischen Systems eine Abgangsgruppe abgespalten wird, die eine neue Radikalkette startet. Diese Abgangsgruppe befindet sich in Allyl- oder Heteroallylstellung beziehungsweise Homoallyl- oder Homoheteroallylstellung, so dass nach H-Abstraktion ein aromatisches Ringsystem entsteht, was eine zusätzliche Triebkraft für den Reaktionsverlauf darstellt.

Bevorzugt bilden sich als aromatisches System 5- oder 6-gliedrige gegebenenfalls substituierte Aromaten oder Heteroaromaten.

Besonders bevorzugt bilden sich 5- oder 6-gliedrige gegebenenfalls substituierte Aromaten oder Heteroaromaten, die nicht mehr als zwei Heteroatome im Ringsystem enthalten.

Ganz besonders bevorzugt bilden sich gegebenfalls substituierte Phenyle, Pyridine, Pyridazine, Pyrimidine, Pyrazine, Pyrane, Thiopyrane, Pyrrole, Pyrazole, Imidazole, Furane, Oxazole, Isoxazole, Thiophene, Thiazole oder Isothiazole.

Bevorzugte Abgangsgruppen sind Carbonsäureester-, Silyl-, Sulfonyl-, Aryl-, Benzyl-, Allyl- oder Alkylgruppen.

Bevorzugt werden als Regler Verbindungen der Formeln (I), (II), (III) oder (IV) verwendet:

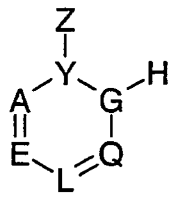
(I)

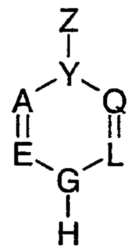
(II)

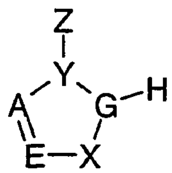
(III)

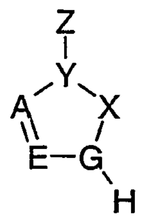
(IV)

A kann entweder C-$R^1$ oder Stickstoff sein, E entweder C-$R^2$ oder Stickstoff, L entweder C-$R^3$ oder Stickstoff und Q entweder C-$R^4$ oder Stickstoff.

Die Reste $R^1$, $R^2$, $R^3$, $R^4$ können unabhängig voneinander beispielsweise Wasserstoff, $C_1$-$C_{10}$-Alkyl, $C_1$-$C_{10}$-Alkoxy, $C_1$-$C_{10}$-Alkylamino, $C_2$-$C_{20}$-Dialkylamino, $C_1$-$C_{10}$-Alkylcarbonyl, $C_1$-$C_{10}$-Alkylsulfonyl, $C_2$-$C_{10}$-Alkenyl oder $C_2$-$C_{10}$-Alkinyl sein, worin $R^1$ und $R^2$, $R^2$ und $R^3$ beziehungsweise $R^3$ und $R^4$ auch miteinander verbunden sein können und so gemeinsam einen drei- bis achtgliedrigen, bevorzugt einen fünf- bis siebengliedrigen und besonders bevorzugt einen fünf- bis sechsgliedrigen Ring bilden können.

G kann entweder C-$R^5$ oder Stickstoff sein.
Der Rest $R^5$ kann z. B. Wasserstoff oder $C_1$-$C_{10}$-Alkyl sein.

X kann ein Heteroatom wie beispielsweise Sauerstoff, Schwefel oder substituierter Stickstoff N-$R^6$ sein.

Der Rest $R^6$ kann z. B. Wasserstoff, $C_1$-$C_{10}$-Alkoxy, $C_1$-$C_{10}$-Alkylamino, $C_2$-$C_{20}$-Dialkylamino, $C_1$-$C_{10}$-Alkylcarbonyl, $C_1$-$C_{10}$-Alkylsulfonyl sein.

Y kann C-$R^7$ oder Stickstoff sein.

Der Rest $R^7$ kann beispielsweise Wasserstoff, Carboxyl, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl, $C_1$-$C_{10}$-Alkylaminocarbonyl, $C_2$-$C_{20}$-Dialkylaminocarbonyl, $C_1$-$C_{10}$-Alkylcarbonyloxy, $C_1$-$C_{10}$.Alkylcarbonylamino, $C_1$-$C_{10}$-Alkylsulfonyl, $C_1$-$C_{10}$-Alkoxysulfonyl, $C_1$-$C_{10}$-Alkylaminosulfonyl, $C_2$-$C_{20}$-Dialkylaminosulfonyl, $C_1$-$C_{10}$-Acyl, $C_2$-$C_{10}$-Alkenyl, $C_3$-$C_{10}$-Alkenyloxy, $C_2$-$C_{10}$-Alkenylcarbonyl, $C_3$-$C_{10}$-Alkenyloxycarbonyl, $C_3$-$C_{10}$-Alkenylaminocarbonyl, $C_2$-$C_{10}$-Alkenylcarbonyloxy, $C_2$-$C_{10}$-Alkenylcarbonylamino, $C_2$-$C_{10}$-Alkenylsulfonyl, $C_3$-$C_{10}$-Alkenyloxysulfonyl, $C_3$-$C_{10}$-Alkenylaminosulfonyl, $C_2$-$C_{10}$-Alkinyl, $C_3$-$C_{10}$-Alkinyloxy, $C_2$-$C_{10}$-Alkinylcarbonyl, $C_3$-$C_{10}$-Alkinyloxycarbonyl, $C_3$-$C_{10}$-Alkinylaminocarbonyl, $C_2$-$C_{10}$-Alkinylcarbonyloxy, $C_2$-$C_{10}$-Alkinylcarbonylamino, $C_2$-$C_{10}$-Alkinylsulfonyl, $C_3$-$C_{10}$-Alkinyloxysulfonyl, $C_3$-$C_{10}$-Alkinylaminosulfonyl, $C_3$-$C_{12}$-Cycloalkyl, $C_3$-$C_{12}$-Cycloalkoxy, $C_3$-$C_{12}$-Cycloalkylcarbonyl, $C_3$-$C_{12}$-Cycloalkoxycarbonyl, $C_3$-$C_{12}$-Cycloalkylaminocarbonyl, $C_3$-$C_{12}$-Cycloalkylcarbonyloxy, $C_3$-$C_{12}$-Cycloalkylcarbonylamino, $C_3$-$C_{12}$-Cycloalkylsulfonyl, $C_3$-$C_{12}$-Cycloalkoxysulfonyl, $C_3$-$C_{12}$-Cycloalkylaminosulfonyl, Aryl, Aryloxy, Arylcarbonyl, Aryloxycarbonyl, Arylaminocarbonyl, Arylcarbonyloxy, Arylcarbonylamino, Arylsulfonyl, Aryloxysulfonyl oder Arylaminosulfonyl sein.

Z ist eine Carbonsäureestergruppe $COOR^8$, wobei $R^8$ $C_1$-$C_{10}$-Alkyl, bevorzugt $C_1$-$C_4$-Alkyl, bedeutet, eine Silylgruppe $SiR^9R^{10}R^{11}$, wobei $R^9$-$R^{11}$ unabhängig voneinander Wasserstoff oder $C_1$-$C_{10}$-Alkyl, insbesondere Wasserstoff oder $C_1$-$C_4$-Alkyl, bedeuten und gegebenfalls zwei der Reste $R^9$-$R^{11}$ miteinander zu einem drei- bis achtgliedrigen, bevorzugt einem fünf- bis siebengliedrigen und besonders bevorzugt einem fünf- oder sechsgliedrigen Ring verbunden sein können, eine Sulfonylgruppe $SO_2R^{12}$, wobei $R^{12}$ Wasserstoff oder $C_1$-$C_{10}$-Alkyl, bevorzugt Wasserstoff oder $C_1$-$C_4$-Alkyl, bedeutet, eine Arylgruppe, eine gegebenfalls substituierte Benzylgruppe, eine Allylgruppe $C_3$-$C_{10}$-2-Alken-1-yl oder eine Alkylgruppe $R^{13}$ mit 1 bis 10 C-Atomen, bevorzugt mit 1 bis 4 C-Atomen. Beispielsweise sei als Abgangsgruppe $COOCH_3$, $COOC_2H_5$, Trialkylsilyl wie Trimethylsilyl, Sulfonyl wie Methylsulfonyl, Phenyl, Benzyl, Allyl wie 2-Propen-1-yl oder Alkyl wie Methyl, Ethyl, Propyl, iso-Propyl, Butyl, sek.-Butyl oder tert.-Butyl genannt.

Im einzelnen bedeuten die für die verschiedenen Reste R angegebenen Sammelbegriffe Folgendes:

$C_1$-$C_{10}$Alkyl: geradkettige oder verzweigte Kohlenwasserstoffreste mit bis zu 10 Kohlenstoffatomen, z.B. $C_1C_6$-Alkyl wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 2,2-Dimethylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl.

Diese beispielhaft aufgeführten Alkylreste sind ebenfalls bevorzugt, wenn sie als Teil einer funktionellen Gruppe

mit dem Ring verbunden sind, also im Falle von Alkoxy, Alkyl- oder Dialkylamino, Alkyl- oder Alkoxycarbonyl, Alkylamino- oder Dialkylaminocarbonyl, Alkylcarbonyloxy, Alkylcarbonylamino, Alkyl- oder Alkoxysulfonyl, Alkylamino-oder Dialkylaminosulfonyl oder Acyl.

$C_2$-$C_{10}$-Alkenyl: ungesättigte, geradkettige oder verzweigte Kohlenwasserstoffreste mit 2 bis 10 Kohlenstoffatomen und einer Doppelbindung in einer beliebigen Position, z.B. $C_2$-$C_6$-Alkenyl wie Ethenyl, 1-Propenyl, 2-Propenyl, 1-Methylethenyl, 1-Butenyl, 2- - Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl.

Diese beispielhaft aufgeführten Alkenylreste sind ebenfalls bevorzugt, wenn sie als Teil einer funktionellen Gruppe mit dem Ring verbunden sind, also im Falle von Alkenyloxy, wobei die Doppelbindung in einer beliebigen, nicht zum Heteroatom benachbarten Position steht, Alkenyl-oder Alkenyloxycarbonyl, Alkenylaminocarbonyl, Alkenylcarbonyloxy, Alkenylcarbonylamino, Alkenylsulfonyl, Alkenyloxysulfonyl oder Alkenylaminosulfonyl.

$C_2$-$C_{10}$-Alkinyl: geradkettige oder verzweigte Kohlenwasserstoffgruppen mit 2 bis 10 Kohlenstoffatomen und einer Dreifachbindung in einer beliebigen Position, z.B. Ethinyl oder $C_3$-$C_6$-Alkinyl wie 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl und 1-Ethyl-1-methyl-2-propinyl.

Diese beispielhaft aufgeführten Alkinylreste sind ebenfalls bevorzugt, wenn sie als Teil einer funktionellen Gruppe mit dem Ring verbunden sind, also im Falle von Alkinyloxy mit einer Dreifachbindung in einer beliebigen, nicht zum Heteroatom benachbarten Position, Alkinyl-oder Alkinyloxycarbonyl, Alkinylaminocarbonyl, Alkinylcarbonyloxy, Alkinylcarbonylamino, Alkinylsulfonyl, Alkinyloxysulfonyl oder Alkinylaminosulfonyl.

$C_3$-$C_{12}$-Cycloalkyl: monocyclische, gesättigte Kohlenwasserstoffgruppen mit 3 bis zu 12 Kohlenstoffringgliedern, z.B. $C_3$-$C_8$-Cycloalkyl wie Cyclopropyl, Cyclobutyl, Cyclopentyl, Cyclohexyl, Cycloheptyl und Cyclooctyl.

Diese beispielhaft aufgeführten Cycloalkylreste sind ebenfalls bevorzugt, wenn sie als Teil einer funktionellen Gruppe mit dem Ring verbunden sind, also im Falle von Cycloalkoxy, Cycloalkylcarbonyl, Cycloalkoxycarbonyl, Cycloalkylaminocarbonyl, Cycloalkylcarbonyloxy, Cycloalkylcarbonylamino, Cycloalkylsulfonyl, Cycloalkoxysulfonyl oder Cycloalkylaminosulfonyl.

Aryl: ein ein- bis dreikerniges aromatisches Ringsystem enthaltend 6 bis 14 Kohlenstoffringglieder, z.B. Phenyl, Naphthyl und Anthracenyl.

Bevorzugte Arylreste sind Phenylreste, die gegebenenfalls 1 bis 3 inerte Substituenten wie beispielsweise $C_1$-$C_4$-Alkylreste tragen können.

Diese beispielhaft aufgeführten Arylreste sind ebenfalls bevorzugt, wenn sie als Teil einer funktionellen Gruppe mit dem Ring verbunden sind, also im Falle von Aryloxy, Arylcarbonyl,
Aryloxycarbonyl, Arylaminocarbonyl, Arylcarbonyloxy, Arylcarbonylamino, Arylsulfonyl, Aryloxysulfonyl oder Arylaminosulfonyl.

Bevorzugte Reste $R^1$ bis $R^7$ sind $C_1$-$C_{10}$-alkyl, $C_1$-$C_{10}$-alkoxy, $C_1$-$C_{10}$-Alkylamino, $C_1$-$C_{10}$-Alkylcarbonyl, $C_1$-$C_{10}$-Acyl, $C_2$-$C_{10}$-Alkenyl und $C_2$-$C_{10}$-Alkinyl.

Bevorzugte Abgangsgruppen Z sind Carbonsäureestergruppen $COOR^8$ mit $C_1$-$C_4$-Alkylresten als $R^8$, Silylgruppen $SiR^9R^{10}R^{11}$ mit unabhängig voneinander Wasserstoff oder $C_1$-$C_4$-Alkylgruppen als $R^9$-$R^{11}$, wobei gegebenenfalls mindestens zwei der Reste $R^9$-$R^{11}$ miteinander zu einem 3- bis 8-gliedrigen Ring, insbesondere einem 5- oder 6-gliedrigen Ring, verbunden sein können, Sulfonylgruppen $SO_2R^{12}$ mit Wasserstoff oder $C_1$-$C_4$-Alkylresten als $R^{12}$, gegebenfalls substituierte Phenyle und Benzyle, Allyle mit 3 bis 6 C-Atomen und Alkyle mit 1 bis 4 C-Atomen

Besonders bevorzugte Abgangsgruppen Z sind Carbonsäureestergruppen $COOR^8$ mit Methyl-, Ethyl-, Propyl, iso-Propyl-, Butyl-, sek.-Butyl-, tert.-Butylsubstituenten, Silylgruppen $SiR^9R^{10}R^{11}$ mit unabhängig voneinander Wasserstoff oder Methyl, Ethyl, Propyl, iso-Propyl, Butyl, sek.-Butyl oder tert.-Butyl substituiert, Benzyl, Allyle wie 2-Propen-1-yl und Alkyle wie Methyl, Ethyl, Propyl, iso-Propyl, Butyl, sek.-Butyl oder tert.-Butyl.

Die genannten Reste und Gruppen können auch gegebenenfalls substituiert sein und einen bis drei, vorzugsweise einen der folgenden Rest tragen: Cyano, Nitro, Hydroxy, Amino, Formyl, Carboxyl, Aminocarbonyl, Alkyl, Alkoxy, Alkylamino, Dialkylamino, Alkylcarbonyl, Alkoxycarbonyl, Alkylcarbonyloxy, Alkylaminocarbonyl, Dialkylaminocarbonyl, Alkylcarbonylamino, Alkoxycarbonylamino, Alkylcarbonyl-N-alkylamino, wobei die Alkylgruppen in diesen Resten vorzugsweise 1 bis 6 Kohlenstoffatome, insbesondere 1 bis 4 Kohlenstoffatome aufweisen.

Bevorzugte Verbindungen der allgemeinen Formeln (I), (II), (III) und (IV) sind 2,5-Cyclohexadien-1-carbonsäure, 1-iso-Propyl-2,5-cyclohexadien-1-carbonsäure, 1-tert.-Butyl-2,5-cyclohexadien-1-carbonsäure, 1-Benzyl-2,5-cyclohexadien-1-carbonsäure, 1-Allyl-2,5-cyclohexadien-1-carbonsäure, 1-Cyanomethyl-2,5-cyclohexadien-1-carbonsäure, 1-Methyl-2,5-cyclohexadien-1-carbonsäure und deren $C_1$-$C_4$-Alkylester wie 2,5-Cyclohexadien-1-carbonsäuremethylester, 1-Methyl-2,5-cyclohexadien-1-carbonsäuremethylester, 2,4-Cyclohexadien-1-carbonsäure, 1-Methyl-2,4-cyclohexadien-1-carbonsäure, 2,4-Cyclohexadien-1-carbonsäuremethylester und deren $C_1$-$C_4$-Alkylester wie 1-Methyl-2,4-cyclohexadien-1-carbonsäuremethylester, 2,5-Dihydrofuran-2-carbonsäure, 2-Methyl-2,5-dihydrofuran-2-carbonsäure und deren $C_1$-$C_4$-Alkylester wie 2,5-Dihydrofuran-2-carbonsäuremethylester, 2-Methyl-2,5-dihydrofuran-2-carbonsäuremethylester, 2*H*-Pyridin-1-carbonsäure, 2*H*-Pyridincarbonsäuremethylester, 4*H*-Pyridin-1-carbonsäure, 4H-Pyridincarbonsäuremethylester, 2,6-Dimethoxy-2,5-cyclohexadien-1-trimethylsilan, 1-Methyl-2,6-dimethoxy-2,5-cyclohexadien-1-trimethylsilan, 2,6-Dimethoxy-2,5-cyclohexadien-1-tert.-butyl-dimethylsilan, 1-Methyl-2,6-dimethoxy-2,5-cyclohexadien-1-tert.-butyl-dimethylsilan, 2,6-Dimethoxy-2,5-cyclohexadien-1 -phenyl-dimethylsilan, 1-Methyl-2,6-dimethoxy-2,5-cyclohexadien-1-phenyl-dimethylsilan, 2,6-Dimethoxy-2,5-cyclohexadien-1-triisopropylsilan, 1-Methyl-2,6-dimethoxy-2,5-cyclohexadien-1-triisopropylsilan, 2,5-Cyclohexadien-1-trimethylsilan, 1-Methyl-2,5-cyclohexadien-1-trimethylsilan.

Bevorzugte Verbindungen sind solche, die nach H-Abstraktion und Abspaltung der Gruppe Z ein Phenyl- oder ein Furansystem ausbilden, beispielsweise 2,5-Cyclohexadien-1-carbonsäure, 1-Methyl-2,5-cyclohexadien-1-carbonsäure, 1-iso-Propyl-2,5-cyclohexadien-1-carbonsäure, 1-tert.-Butyl-2,5-cyclohexadien-1-carbonsäure, 1-Benzyl-2,5-cyclohexadien-1-carbonsäure, 1-Allyl-2,5-cyclohexadien-1-carbonsäure, 1-Cyanomethyl-2,5-cyclohexadien-1-carbonsäure, 2,5-Cyclohexadien-1-carbonsäuremethylester, 1-Methyl-2,5-cyclohexadien-1-carbonsäuremethylester, 2,4-Cyclohexadien-1-carbonsäure, 1-Methyl-2,4-cyclohexadien-1-carbonsäure, 2,4-Cyclohexadien-1-carbonsäuremethylester, 1-Methyl-2,4-cyclohexadien-1-carbonsäuremethylester, 2,5-Dihydrofuran-2-carbonsäure, 2-Methyl-2,5-dihydrofuran-2-carbonsäure, 2,5-Dihydrofuran-2-carbonsäuremethylester, 2-Methyl-2,5-dihydrofuran-2-carbonsäuremethylester, 2,6-Dimethoxy-2,5-cyclohexadien-1-trimethylsilan, 1-Methyl-2,6-dimethoxy-2,5-cyclohexadien-1-trimethylsilan, 2,6-Dimethoxy-2,5-cyclohexadien-1-tert.-butyl-dimethylsilan, 1-Methyl-2,6-dimethoxy-2,5-cyclohexadien-1-tert.-butyldimethylsilan, 2,6-Dimethoxy-2,5-cyclohexadien-1-phenyl-dimethylsilan, 1-Methyl-2,6-dimethoxy-2,5-cyclohexadien-1-phenyl-dimethylsilan, 2,6-Dimethoxy-2,5-cyclohexadien-1-triisopropylsilan, 1-Methyl-2,6-dimethoxy-2,5-cyclohexadien-1-triisopropylsilan, 2,5-Cyclohexadien-1-trimethylsilan, 1-Methyl-2,5-cyclohexadien-1-trimethylsilan.

Ganz besonders bevorzugt sind 1-Methyl-2,5-cyclohexadien-1-carbonsäuremethylester, 1-iso-Propyl-2,5-cyclohexadien-1-carbonsäure, 1-tert.-Butyl-2,5-cyclohexadien-1-carbonsäure, 1-Benzyl-2,5-cyclohexadien-1-carbonsäure, 1-Allyl-2,5-cyclohexadien-1-carbonsäure und/oder 1-Cyanomethyl-2,5-cyclohexadien-1-carbonsäure.

Die genannten Verbindungen der allgemeinen Formeln (I) bis (IV), in denen Z eine Carbonsäureestergruppe enthält werden analog nach literaturbekannten Verfahren synthetisiert.

Walton et al. beschreibt u. a. in J. Chem. Soc., Perkin Trans. 2,1997, Seiten 757-762 ausgehend von Benzoesäure beziehunsgweise Furan-2-carbonsäure die Synthese einiger 2,5-Cyclohexadien-1-carbonsäure- beziehungsweise 2,5-Dihydrofuran-2-carbonsäure-Derivate. Diese werden über eine Birch-Reduktion mit anschliessender Alkylierung mit einem Alkylhalogenid und gegebenenfalls einer Veresterung der Säuregruppe erhalten.

In J. Chem. Soc., Perkin Trans. 2, 1998, Seiten 1423-1429 lehrt Walton et al. die Synthese einiger 2H- beziehungsweise 4H-Pyridin-1-carbonsäurederivate durch Umsetzung von Pyridin mit Natriumborhydrid und gegebenfalls derivatisiertes Carbonyldichlorid.

Ebenfalls können die genannten Verbindungen der allgemeinen Formeln (I) bis (IV), in denen Z eine Trialkylsilylgruppe enthält, analog nach literaturbekannten Verfahren dargestellt werden (vgl. z. B. Angew. Chem., Int. Ed. 2000, Band 29, Vol. 17, Seiten 3080-3082).

Die Verbindungen der allgemeinen Formeln (I) bis (IV) enthalten ein allylisches oder heteroallylisches beziehungsweise homoallylisches oder homoheteroallylisches Wasserstoffatom, das radikalisch abstrahiert wird. Selbstverständlich kann es sich dabei auch um ein bisallylisches oder bisheteroallylisches Wasserstoffatom handeln. Intermediär bildet sich beispielsweise ein Cyclohexadienyl- beziehungsweise ein Dihydrofuranyl-Radikal. Unter Abspaltung der Abgangsgruppe bildet sich ein aromatisches System aus, und es entsteht eine radikalische Abgangsgruppe, die eine neue Radikalkette startet. Im Falle der Carbonsäureestergruppe als radikalische Abgangsgruppe entweicht Kohlendioxid und es entsteht ein hochreaktives Alkylradikal. Ein solcher Mechanismus wird beispielhaft in J. Chem. Soc., Chem. Commun. 1995, Seiten 27-28 von Walton et al. beschrieben.

Erfindungsgemäß werden vorzugsweise 0,005 bis 6 Gew.-% und insbesondere bevorzugt 0,01 bis 5 Gew.-%

Regler bezogen auf die Gesamtmenge an Monomeren eingesetzt.

Selbsverständlich sind auch Mischungen aus zwei oder mehreren der erfindungsgemäß zu verwendenden Regler möglich.

Weiterhin können auch Mischungen der erfindungsgemäß verwendeten Regler mit bereits bekannten Reglersystemen eingesetzt werden. Insbesondere sind Mischungen mit organischen Verbindungen S mit wenigstens einer SH-Gruppe möglich. Diese Verbindungen S sind bevorzugt in den hydrophoben Monomeren Styrol und Butadien löslich. Insbesondere sind sie ausgewählt unter $C_4$-$C_{18}$-Alkylmercaptanen wie n-Hexylmercaptan, n-Octylmercaptan, tert.-Octylmercaptan, n-Decylmercaptan, n-Dodecylmercaptan, tert.-Dodecylmercaptan, n-Hexyldecylmercaptan und Stearylmercaptan.

Die verschiedenen Regler können selbstverständlich zeitgleich, aber auch zu unterschiedlichen Zeitpunkten zugesetzt werden.

Die Wahl der verschiedenen Substituenten R ermöglicht eine gezielte Steuerung des Lösungsverhaltens des Reglersystems. In Emulsionspolymerisationen werden bevorzugt Regler eingesetzt, die hydrophob sind, d. h. die Reste R sind aus den genannten Gruppen so ausgewählt, dass der gesamte Regler im wässrigen Medium nur schlecht löslich ist und die Polymerisation im Latexteilchen regelt. Durch die Einführung von polaren Substituenten erhalten die Regler ein hydrophiles Löslichkeitsverhalten, so dass diese Regler bevorzugt für Lösungspolymerisationen in Wasser eingesetzt werden.

Ebenso ist es möglich, das Löslichkeitsverhalten des Reglersystems durch verschiedene Mischungen mit den organischen Verbindungen S zu steuern.

Erfindungsgemäß erfolgt die Reglerzugabe kontinuierlich im Verlauf der Polymerisationsreaktion. Weiterhin ist die Vorlage des Reglers im Polymerisationsgefäß möglich.

Bevorzugt ist die Kombination aus beiden Verfahren, in dem ein Teil des Reglers, der in der Regel 20 % der gesamten Reglermenge nicht überschreiten wird, im Polymerisationsgefäß vorgelegt wird, insbesondere dann, wenn auch Monomere im Polymerisationsgefäß vorgelegt werden. Vorzugsweise erfolgt die Reglerzugabe parallel zur Monomerzugabe, d. h. die Hauptmenge, insbesondere wenigstens 80 % und besonders bevorzugt die Gesamtmenge des Reglersystems wird in dem Zeitraum zugegeben, in dem auch die zu polymerisierenden Monomere der Polymerisationsreaktion zugeführt werden. Hierbei hat es sich insbesondere bewährt, wenn man die Regler zusammen mit den Monomeren der Polymerisationsreaktion zuführt. Selbstverständlich kann die Reglerzugabe auch über einen getrennten Zulauf erfolgen.

In weiteren Ausführungsformen erfolgt die Dosierung des Reglers über sogenannte Rampen und Stufen, also in Fahrweisen, in denen die Reglerzugabe später als der Monomerzulauf startet beziehungsweise früher als dieser endet.

Erfindungsgemäß ist es auch möglich, dass sich die Konzentration des Reglersystems während der Zugabe nach den genannten Variationen ändert. Bevorzugt startet man mit höheren Reglerkonzentrationen, die im Verlauf der Polymerisationsreaktion abnehmen.

Das erfindungsgemäße Verfahren findet Anwendung in allen Polymerisationen, die nach einem radikalisch initiierten Mechanismus ablaufen. Diese werden im Folgenden näher erläutert.

Polymerisationsreaktionen können nach verschiedenen Mechanismen verlaufen. Der Unterschied liegt in der Initiierung des Polymerisationsmechnismus, dieser kann radikalisch, anionisch, kationisch oder auch koordinativ, d. h. durch Koordination an Übergangsmetallkatalysatoren, initiiert werden.

Die radikalische Polymerisationsreaktion ist eine dem Fachmannn bekannte Kettenreaktion, die im Wesentlichen aus folgenden Schritten besteht: Kettenstart, Kettenwachstum, Kettenübertragung und Kettenabbruch. Der Kettenstart erfolgt durch einen radikalischen Initiator oder thermisch. Für den kontrollierten Kettenabbruch werden bisher die im Stand der Technik beschriebenen Reglersubstanzen verwendet.

Das erfindungsgemäße Verfahren findet im kontrollierten Kettenabbruch einer radikalischen Polymerisationsreaktion Anwendung.

Homo- und Copolymerisate im Sinne der vorliegenden Erfindung sind aus radikalisch polymerisierbaren Verbindungen (Monomere) aufgebaut.

Copolymerisate bestehen bevorzugt zu mindestens 40 Gew.%, besonders bevorzugt zu mindestens 60 Gew.-%, ganz besonders bevorzugt zu mindestsens 80 Gew.-% aus sogenannten Hauptmonomeren.

Die Hauptmonomere sind ausgewählt aus monoethylenisch ungesättigten $C_3$-$C_6$-Carbonsäuren, $C_1$-$C_{20}$-(Meth)acrylsäureester, -amiden und -nitrilen , Vinylestern von bis zu 20 C-Atome enthaltenden Carbonsäuren, Vinylaromaten mit bis zu 20 C-Atomen, Vinylhalogeniden, Vinylethern von 1 bis 10 C-Atome enthaltenden Alkoholen, aliphatischen gegebenenfalls halogenierten Kohlenwasserstoffen mit 2 bis 8 C-Atomen und 1 oder 2 Doppelbindungen, offenkettigen N-Vinylamidverbindungen, Vinylidenen oder Mischungen dieser Monomeren.

Bevorzugte monoethylenisch ungesättigte $C_3$-$C_6$-Carbonsäuren sind z. B. Acrylsäure, Methacrylsäure, Crotonsäure, Fumarsäure, Itaconsäure, Maleinsäure sowie deren $C_1$-$C_{20}$-Alkylester, -Amide, -Nitrile und -Anhydride wie z. B. Acrylsäuremethylester, Acrylsäureethylester, Methacrylsäuremethylester, Methacrylsäureethylester, n-Butylacrylat, n-Butylmethacrylat, Methacrylsäurearylester, Acrylsäureanhydrid, Itaconsäureanhydrid, Maleinsäuremonomethylester,

Maleinsäuredimethylester, Maleinsäuremonoethylester, Maleinsäurediethylester, 2-Ethylhexylacrylat, 2-Ethylhexylmethacrylat, Maleinsäureanhydrid sowie dessen Halbester, Alkylenglykol(meth)acrylate, Acrylamid, Methacrylamid, N-Dimethylacrylamid, N-tert.-butylacrylamid, Acrylnitril, Methacrylnitril. Kationische Monomere dieser Gruppe sind beispielsweise Dialkylaminoalkyl(meth)acrylate und Dialkylaminoalkyl(meth)acrylamide wie Dimethylaminomethylacrylat, Diethylaminoethylacrylat, Diethylaminoethylmethacrylat, sowie die Salze der zuletzt genannten Monomeren mit Carbonsäuren oder Mineralsäuren sowie die quaternierten Produkte.

Weitere Monomere sind z. B. auch Hydroxylgruppen enthaltende Monomere, insbesondere $C_1$-$C_{10}$-Hydroxyalkyl(meth)acrylate wie beispielsweise Hydroxyethylacrylat, Hydroxypropylacrylat, Hydroxybutylacrylat, Hydroxyethylmethacrylat, Hydroxypropylmethacrylat, Hydroxyisobutylacrylat, Hydroxyisobutylmethacrylat.

Weitere Monomere sind Phenyloxyethylgiykol-mono-(meth)acrylat, Glycidylacrylat, Glycidylmethacrylat, Amino (meth)acrylate wie 2-Aminoethyl(meth)acrylat.

Insbesondere sind auch Mischungen der (Meth)acrylsäurealkylester geeignet.

Vinylester von Carbonsäuren mit 1 bis 20 C-Atomen sind z. B. Vinyllaurat, Vinylstearat, Vinylpropionat, Versaticsäurevinylester und Vinylacetat.

Als vinylaromatische Verbindungen kommen Vinyltoluol, $\alpha$- und p-Methylstyrol, $\alpha$-Butylstyrol, 4-n-Butylstyrol, 4-n-Decylstyrol, 2-Vinylpryridin, N-Vinylpyrrolidon und vorzugsweise Styrol in Betracht.

Die Vinylhalogenide sind mit Chlor, Fluor oder Brom substituierte ethylenisch ungesättigte Verbindungen, bevorzugt Vinylchlorid, Vinylfluorid und Vinylidenchlorid.

Als Vinylether zu nennen sind z. B. Methylvinylether, Ethylvinylether, Butylvinylether, 4-Hydroxybutylvinylether, Vinylisobutylether oder Dodecylvinylether. Bevorzugt werden Vinylether von 1 bis 4 C-Atome enthaltenden Alkoholen.

Als aliphatische gegebenfalls halogenierte Kohlenwasserstoffe mit 2 bis 8 C-Atomen und 1 oder 2 olefinischen Doppelbindungen seien beispielhaft Ethylen, Propen, I-sopropen, 1-Buten, Isobuten, Butadien, Isopren (2-Methyl-1,3-butadien) und Chloropren (2-Chlor-1,3-butadien) genannt.

Weiterhin können offenkettige N-Vinylamidverbindungen wie beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid eingesetzt werden.

Als Vinylidene sei beispielsweise Vinylidencyanid genannt.

Weitere Monomere sind Vinylessigsäure, Vinylcarbazol, Hydroxymethylvinylketon, Vinylencarbonat, Tetrafluorethylen, Hexafluorpropen, Nitroethylen, Allylessigsäure, $\alpha$-Chloracrylester, $\alpha$-Cyanoacrylester, Methylenmalonester, $\alpha$-Cyansorbinsäureester, Cyclopentadien und Cyclopenten.

Neben den genannten Hauptmonomeren kann das Polymer weitere Monomere enthalten, z. B. ethylenisch ungesättigte Monomere mit Sulfonsäure- oder Phosphonsäuregruppen wie Vinylsulfonsäure, Allylsulfonsäure, Styrolsulfonsäure, 2-Acrylamidomethylpropansulfonsäure oder Vinylphosphonsäure, Allylphosphonsäure, Styrolphosphonsäure, 2-Acrylamido-2-methylpropanphosphonsäure.

Darüber hinaus sind alle weiteren Monomere, deren Polymerisation nach einem radikalisch initiierten Mechanismus verläuft, möglich, wie beispielsweise in DE-A 10 041 211 und in der älteren deutschen Anmeldung mit dem Aktenzeichen 10148497.6 beschrieben.

Als weitere Monomere seien weiterhin auch vernetzende Monomere genannt.

Bevorzugte Monomere sind Styrol, Butadien, Acrylsäure, Methacrylsäure, $C_1$-$C_{10}$-Alkylester der Acrylsäure und Methacrylsäure, N-Vinylpyrrolidon und Acrylnitril.

Man unterscheidet zwischen mehreren Polymerisationsarten, die unter anderem radikalisch initiiert werden können.

Das erfindungsgemäße Verfahren findet in radikalischen Polymerisationen verschiedener Arten Anwendung, insbesondere in Emulsion, in Mikroemulsion, in Miniemulsion, in Suspension, in Mikrosuspension, in Minisuspension, in Fällungspolymerisationen, in Masse oder in Lösung, kontinuierlich oder diskontinuierlich.

Bei der Emulsionspolymerisation und ihren Varianten (Mikroemulsion, Miniemulsion) werden die Monomere in Wasser emulgiert, wozu Emulgatoren verwendet werden. Die für die Stabilisierung der Emulsion geeigneten Emulgatoren sind seifenartige Hilfsstoffe, welche die Monomertröpfchen umhüllen und auf diese Weise vor dem Zusammenlaufen schützen.

Als Emulgatoren eignen sich die dem Fachmann bekannten anionischen, kationischen oder neutralen (nichtionogenen) Emulgatoren. Anionische Emulgatoren sind z. B. Alkalimetallsalze von höheren Fettsäuren mit 10 bis 30 C-Atomen wie Palmitin-, Stearin- und Ölsäure, Alkalimetallsalze von Sulfonsäuren mit z. B. 10 bis 16 C-Atomen, insbesondere Natriumsalze von Alkyl- oder Alkylarylsulfonsäuren, Alkalimetallsalze von Halbestern der Phthalsäure, und Alkalimetallsalze von Harzsäuren wie Abietinsäure. Kationische Emulgatoren sind z. B. Salze langkettiger, insbesondere ungesättigter Amine mit 12 bis 18 C-Atomen, oder quaternäre Ammoniumverbindungen mit längerkettigen Olefin- oder Paraffinresten (also Salze quaternisierter Fettamine). Neutrale Emulgatoren sind z. B. ethoxylierte Fettalkohole, ethoxylierte Fettsäuren oder ethoxylierte Phenole und Fettsäureester von mehrwertigen Alkoholen wie Pentaerythrit oder Sorbit.

Für die Emulsionspolymerisation werden bevorzugt Initiatoren verwendet, die in dem Monomeren schlecht

löslich, in Wasser dagegen gut löslich sind. Es werden daher bevorzugt Peroxosulfate wie Kalium-, Natrium- oder Ammoniumperoxodisulfat verwendet, oder auch Redox-Systeme, insbesondere solche auf Basis von Hydroperoxiden wie Cumolhydroperoxid, Dicumolperoxid oder Wasserstoffperoxid.

Der oder die Initiatoren können vor oder nach der Herstellung der Emulsion zugegeben werden, oder erst unmittelbar vor Beginn der Polymerisation, oder auch kontinuierlich im Verlauf der Polymerisation nachdosiert werden.

Insbesondere bei Monomeren, die zu unkontrollierter Polymerisation neigen, oder bereits bei der Temperatur der Emulsionsherstellung polymerisieren, ist es ratsam, den Initiator erst nach der Emulgierung, u. U. erst unmittelbar vor der Polymerisation, zuzugeben.

Insbesondere bei Polymerisationen mit einer langen Polymerisationsdauer kann es vorteilhaft sein, den Initiator, als kontinuierlichen Zulauf oder portionsweise, während der Polymerisation zuzugeben. Dabei kann die Dauer des Initiatorzulaufs von der Dauer der Polymerisation verschieden oder gleich sein.

Als weitere Zusatzstoffe können bei der Polymerisation Puffersubstanzen wie $Na_2HPO_4$/$NaH_2PO_4$ oder Na-citrat/Citronensäure verwendet werden, um einen im Wesentlichen konstant bleibenden pH-Wert einzustellen. Diese weiteren Zusatzstoffe können kontinuierlich oder diskontinuierlich am Anfang und/oder während der Herstellung der Emulsion und/oder während der Polymerisation zugefügt werden.

Das Polymerisationsmedium für Emulsionspolymerisationen kann sowohl nur aus Wasser, als auch aus Mischungen aus Wasser und damit mischbaren organischen Flüssigkeiten wie Methanol, Ethanol, n-Propanol, iso-Propanol, n-Butanol, tert.-Butanol, Tetrahydrofuran, Formamid, Dimethylformamid, bestehen, wobei der Anteil dieser Flüssigkeiten bezogen auf das Polymerisationsmedium üblicherweise nicht mehr als 10 Gew.-%, insbesondere nicht mehr als 5 Gew.-% und speziell nicht mehr als 1 Gew.-% ausmacht. Vorzugsweise wird nur Wasser als Polymerisationsmedium verwendet.

Neben der zuvor beschrieben saatfreien Herstellungsweise kann zur Einstellung einer definierten Polymerteilchengröße die Emulsionspolymerisation der 1. Polymerisationsstufe nach dem Saatlatex-Verfahren oder in Gegenwart von in situ hergestelltem Saatlatex efolgen. Verfahren hierzu sind bekannt und können dem Stand der Technik entnommen werden (siehe EP-B 40 419, EP-A 614 922, EP-A 657 812 und dort zitierte Literatur sowie 'Encyclopedia of Polymer Science and Technology', Vol. 5, John Wiley & Sons Inc., New York 1966, S. 847).

Bei dem Saatlatex-Verfahren erfolgt die Polymerisation der Monomere in Anwesenheit von 0,001 bis 5 Gew.-% und insbesondere 0,01 bis 3 Gew.-% eines Saatlatex (Feststoffgehalt des Saatlatex, bezogen auf Gesamtmonomermenge), vorzugsweise mit vorgelegtem Saatlatex (Vorlagensaat). Der Latex weist in der Regel eine gewichtsmittlere Teilchengröße von 10 bis 200 nm und insbesondere 20 bis 200 nm auf. Seine konstituierenden Monomere sind beispielsweise Styrol, Methylmethacrylat, n-Butylacrylat und Mischungen davon, wobei der Saatlatex in untergeordenetem Maße auch weitere Monomere (z. B. Acrylsäure), vorzugsweise weniger als 10 Gew.%, bezogen auf das Gesamtgewicht der Polymerisatteilchen im Saatlatex, einpolymerisiert enthalten kann.

Man nimmt die Emulsionspolymerisationsreaktion in der Regel unter langsamem und mäßigem Rühren vor.

Die Mikroemulsionspolymerisation unterscheidet sich von der normalen Emulsionspolymerisation vor allem dadurch, dass aus den Monomeren, Wasser und den Emulgatoren eine Emulsion bereitet wird, indem man hohe Scherkräfte einwirken lässt. Dazu verwendet man Homogenisatoren, die dem Fachmann bekannt sind.

Beispielhaft seien genannt:

- Labordissolver Dispermat®, Fa. VMA-Getzmann, Reichshof, DE,
- Ultra-Turax®, Fa. Janke und Kunkel, Staufen, DE,
- Druckhomogenisator, Fa. Gaulin, Lübeck, DE,
- Geräte mit einem Rotor-Stator-System, etwa
    - Dispax®, Fa. Janke und Kunkel, Staufen, DE,
    - Cavitron-Homogenisatoren, Fa. v. Hagen & Funke, Sprockhövel, DE,
    - Homogenisatoren der Fa. Kotthoff, Essen, DE,
    - Homogenisatoren der Fa. Dorr Oliver, Grevenbroich, DE.

Üblicherweise betreibt man diese Geräte bei Drehzahlen von 1 000 bis 25 000 $min^{-1}$, bevorzugt 2 000 bis 25 000 $min^{-1}$.

Weiterhin können die hohen Scherkräfte ebenso durch

- Einwirkung von Ultraschall,
- Hindurchpressen der Mischung aus Monomeren, Wasser und Schutzkolloiden bzw. Emulgatoren unter hohem Druck durch einen engen Spalt oder durch Düsen kleinen Durchmessers
- Kolloidmühlen

oder andere geeignete Homogenisatoren erzeugt werden.

Die Miniemulsionspolymerisation unterscheidet sich von der normalen Emulsionspolymerisation und der Mikroemulsionspolymerisation vor allem dadurch, dass die Partikelgröße in der Regel zwischen 30-500 nm beträgt, also zwischen den typischen Partikelgrößen der Emulsions- und der Mikroemulsionspolymerisation liegt, und die Partikel üblicherweise durch eine Kombination von ionischen Emulgatoren und Co-Emulgatoren gegen das Zusammenlaufen stabilisiert werden.

Bei der Miniemulsion wird das Gemisch aus Monomeren, Wasser, Emulgatoren und Co-Emulgatoren hohen Scherkräften ausgesetzt, wodurch die Komponenten innig vermischt werden. Anschließend wird polymerisiert. Die hohen Scherkräfte können beispielsweise durch Ultraschall oder durch ein Microfluidizer-Gerät erzeugt werden, wie bei der Mikroemulsion beschrieben. Einzelheiten der Miniemulsion findet der Fachmann in P. Covell, M. El-Asser, Emulsion Polymerization and Emulsion Polymers, Verlag John Wiley, New York, 1997, S. 699-722.

Als Co-Emulgatoren werden solche Verbindungen gewählt, die bewirken, dass die Tröpfchen, die vom Starten der Polymerisation gebildet werden, sehr klein bleiben (siehe Gilbert, Emulsion Polymerization, A Mechanistic Approach, Academic Press, London, San Diego, 1995, S. 12-14). Als Co-Emulgatoren werden üblicherweise langkettige Alkane wie Hexadecan oder langkettige Alkohole wie Hexadecanol (Cetylalkohol) oder Dodecanol eingesetzt.

Bei der Suspensionspolymerisation und ihren Varianten (Mikrosuspension, Minisuspension) werden die Monomeren in Wasser suspendiert, wozu Schutzkolloide oder Emulgatoren mitverwendet werden.

Als Schutzkolloide eignen sich Cellulosederivate wie Carboxymethylcellulose und Hydroxymethylcellulose, Poly-N-vinylpyrrolidon, Polyvinylalkohol und Polyethylenoxid, anionische Polymere wie Polyacrylsäure und deren Copolymere und kationische wie Poly-N-vinylimidazol. Die Menge dieser Schutzkolloide beträgt vorzugsweise 0,1 bis 5 Gew.-%, bezogen auf die Gesamtmasse der Emulsion. Schutzkolloide sowie Verfahren zur Herstellung von Schutzkolloiden sind an sich bekannt und beispielsweise in Encyclopedia of Polymer Science and Engineering, Vol. 16, S. 488, Verlag John Wiley, 1989, beschrieben.

Bevorzugt werden ein oder mehrere Polyvinylalkohole als Schutzkolloid verwendet, insbesondere solche mit einem Hydrolysegrad unter 96 mol-%, besonders bevorzugt 60 bis 94 und ganz besonders bevorzugt 65 bis 92 mol%. Die bevorzugten Polyvinylalkohole haben eine Viskosität von 2 bis 100 mPa/s, insbesondere von 4 bis 60 mPa/s, gemessen als 4 Gew.-%ige Lösung in Wasser bei 20 °C nach DIN 53015.

Man kann zusätzlich zu den Schutzkolloiden kolloidale Kieselsäure in Konzentrationen von in der Regel 0,2 bis 5 Gew.-%, bezogen auf die Menge an Dispersion, mitverwenden. Näheres zu dieser Methode, die besonders gut mit einem wasserlöslichen Polymeren aus Adipinsäure und Diethanolamin gelingt, ist der US-A 3 615 972 zu entnehmen.

Für die Suspensionspolymerisation sind Initiatoren mit einer Halbwertszeit von einer Stunde, wenn die Temperatur bei 40 bis 150 °C liegt, und die in Monomeren merklich löslich, in Wasser dagegen schlecht löslich sind, bevorzugt.

Es werden daher organische Peroxide, organische Hydroperoxide, Azoverbindungen und/oder Verbindungen mit C-C-Einfachbindungen als Initiatoren RI verwendet. Ebenso werden als radikalische Polymerisationsinitiatoren Monomere verwendet, die bei erhöhter Temperatur spontan polymerisieren. Es können auch Mischungen der genannten Initiatoren RI verwendet werden. Bei den Peroxiden sind diejenigen mit hydrophoben Eigenschaften bevorzugt, insbesondere solche Moleküle mit einem Atomverhältnis Kohlenstoff zu Sauerstoff von größer 3:1. Ganz besonders bevorzugt sind Dilauroylperoxid und Dibenzoylperoxid.

Als Azoverbindungen werden 2,2'-Azobisisobutyronitril und 2,2'-Azobis-2-methylbutyronitril bevorzugt. Als Verbindungen mit labilen C-C-Bindungen verwendet man bevorzugt 3,4-Dimethyl-3,4-diphenylhexan und 2,3-Dimethyl-2,3-diphenylbutan.

Je nach Aggregatzustand des Initiators für die Suspensionspolymerisation und seinem Löslichkeitsverhalten kann er als solcher, bevorzugt jedoch als Lösung, Emulsion (flüssig in flüssig) oder Suspension (fest in flüssig) zugefügt werden, wodurch sich insbesondere kleine Stoffmengen Initiator präziser dosieren lassen.

Es ist auch möglich, den Initiator für die Suspensionspolymerisation im Lösungsmittel oder im Monomeren zu lösen und die entstandene Lösung in Wasser zu dispergieren.

Man nimmt die Suspensionspolymerisationsreaktion in der Regel unter langsamem oder mäßigem Rühren vor.

Die Mikrosuspensionspolymerisation unterscheidet sich von der normalen Suspensionspolymerisation vor allem dadurch, dass durch Einwirkung hoher Scherkräfte eine feinteilige Suspension bereitet wird. Einzelheiten wurden bereits bei der Mikroemulsionspolymerisation beschrieben.

Die Minisuspensionspolymerisation unterscheidet sich von der normalen Suspensionspolymerisation und von der Mikrosuspensionspolymerisation vor allem dadurch, dass die Partikelgrößen in der Regel zwischen denen der Suspensions- und der Mikrosuspensionspolymerisation liegen.

Bei der Fällungspolymerisation sind die eingesetzten Monomere in der kontinuierlichen Phase (z. B. Lösungsmittel oder Lösungsmittelgemisch) löslich, die entstehenden Polymere sind jedoch nicht oder nur begrenzt löslich und fallen daher während der Polymerisation aus. Auch Substanzpolymerisationen, bei denen das entstehende Polymer im Monomer unlöslich ist und daher ausfällt, sind möglich. Je nach Reaktionsmedium sind die bei der Emulsions- bzw. Suspensionspolymerisation beschriebenen Initiatoren möglich. Es kann auch thermisch initiiert werden.

Bei der Massepolymerisation werden die Monomeren ohne Zugabe eines Reaktionsmediums unter Verwendung der genannten monomerlöslichen Initiatoren polymersiert, d. h. die Monomeren sind das Reaktionsmedium. Es kann auch thermisch initiiert werden.

Die Lösungspolymerisation unterscheidet sich von der Massepolymerisation vor allem dadurch, dass Wasser oder ein organisches Lösungsmittel wie Cyclohexan, Ethylbenzol oder Dimethylsulfoxid zur Verdünnung der Monomeren verwendet wird.

Als Polymerisationsinitiatoren kommen bei der radikalischen Lösungspolymerisation beispielsweise Azoverbindungen wie 2,2'-Azobisisobutyronitril, 2,2'-Azobis-2-methylbutyronitril, Diacylperoxide wie Dibenzoylperoxid, Dilauroylperoxid, Didecanoylperoxid und Diisononanoylperoxid, Alkylperester wie tert.-Butylperpivalat, tert.-Butylper-2-ethylhexanoat, tert.-Butylpermaleinat, tert.-Butylperisononanoat, tert.-Butylperneodecanoat und tert.-Butylperbenzoat, Dialkylperoxide wie Dicumylperoxid und Di-tert.-butylperoxid, Peroxidicarbonate wie Dimyristylperoxidicarbonat, Dicetylperoxidicarbonat, Bis(4-tert.-butylcyclohexyl)peroxidicarbonat, Dicyclohexylperoxidicarbonat, Bis(2-ethylhexyl)peroxidicarbonat, Hydroperoxide wie tert.-Butylhydroperoxid, Cumolhydroperoxid allein oder in Gemischen unterschiedlicher Zusammensetzung in Frage.

Das erfindungsgemäße Verfahren kann auch als kombiniertes Verfahren ausgeführt werden, bei dem mindestens zwei der zuvor beschriebenen Polymerisationsverfahren miteinander kombiniert werden. Hier sind insbesondere Masse/Lösung, Lösung/Fällung, Masse/Suspension und Masse/Emulsion zu nennen, wobei mit dem jeweils erstgenannten begonnen und mit dem letztgenannten beendet wird.

Die Menge an Initiator in radikalischen Polymerisationsreaktionen beträgt bevorzugt $10^{-6}$ bis 5 mol/l, insbesondere $10^{-4}$ bis $10^{-1}$ mol/l, bezogen auf die Monomeren. Die genaue Menge richtet sich in bekannter Weise nach dem gewünschten Molekulargewicht des Polymerisates. Diese Mengenangaben beziehen sich naturgemäß nicht auf den Fall, dass ein Monomer zugleich Initiator ist und thermisch initiiert wird, wie es etwa beim Styrol möglich ist.

Die Art und Weise, in der der Initiator im Verlauf der radikalischen Polymerisation dem Polymerisationsgefäß zugegeben wird, ist dem Durchschnittsfachmann bekannt. Er kann sowohl vollständig in das Polymerisationsgefäß als auch nach Maßgabe seines Verbrauchs im Verlauf der radikalischen Polymerisation kontinuierlich oder stufenweise eingesetzt werden. Im Einzelnen hängt dies von der chemischen Natur des Initiatorsystems als auch von der Polymerisationstemperatur ab. Vorzugsweise wird ein kleiner Teil vorgelegt und der Rest nach Maßgabe des Verbrauchs der Polymerisationszone zugeführt. Häufig ist es günstig, wenn die Polymerisationsreaktion so geführt wird, dass zuerst ≤ 50 Gew.-%, oft ≤ 45 Gew.-% oder ≤ 40 Gew.-% des Initiators kontinuierlich über eine längere Zeitperiode und daran anschließend ≥ 50 Gew.-%, oft ≥ 55 Gew.-% oder ≥ 60Gew.-% des Initiators kontinuierlich über eine kürzere Zeitperiode dem Polymerisationsgefäß zugeführt werden.

Die Polymerisationstemperatur hängt naturgemäß von der Zerfallscharakteristik des Polymerisationsinitiators ab und beträgt vorzugsweise wenigstens 60 °C, insbesondere wenigstens 70 °C, besonders bevorzugt wenigstens 80 °C und ganz besonders bevorzugt wenigstens 90 °C. Üblicherweise wird man eine Polymeristionstemperatur von 120 °C und vorzugsweise von 110 °C nicht überschreiten, um aufwendige Druckapparaturen zu vermeiden. Jedoch können bei geeigneter Wahl des Reaktionsgefäßes auch Temperaturen darüber angewendet werden. Bei der sogenannten Kaltfahrweise, d. h. bei Einsatz von Redoxinitiatorsystemen, ist es möglich auch bei geringen Temperaturen zu polymerisieren, beispeilsweise ab 10 °C.

Die radikalische Polymerisation kann in an sich üblicher Weise durchgeführt werden in einer Polymerisationsapparatur, die im Allgemeinen mit einem Rührer, mehreren Zulaufgefäßen beziehungsweise -leitungen, Rückflusskühler, und Heizungs- oder Kühleinrichtugen versehen ist und für das Arbeiten unter Inertgasatmosphäre und Drücken oberhalb beziehungsweise unterhalb des Atmosphärendrucks geeignet ist.

Als Charakteristika für Polymerisate sind u. a. die Glasübergangstemperatur $T_g$, die mittlere Teilchengröße als $d_{50}$-Wert sowie der K-Wert zu nennen.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53765).

Nach Fox (T. G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^{\,1} + x^2/T_g^{\,2} + .... X^n/T_g^{\,n},$$

wobei $x^1$, $x^2$, .... $x^n$ die Massenbrüche der Monomeren 1, 2, .... n und $T_g^1$, $T_g^2$, .... $Tg^n$ die Glasübergangstemperaturen

der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z. B. in Ullmann's Encyclopedia of Industrial Chemistry, Bd. 5, Vol. A21, Seite 169, VCH Weinheim, 1992, aufgeführt. Weitere Quellen für Glasübergangstemperaturen von Homopolymerisaten bilden z. B. J. Brandrup, E. H. Immergut, Polymer Handbook, 1st Ed., J. Wiley, New York, 1966, 2nd Ed., J. Wiley, New York, 1975, und 3rd Ed., J. Wiley, New York, 1989.

Als mittlere Teilchengröße werden die aus der integralen Massenverteilung bestimmten Größen angegeben. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Koolid-Zeitschrift & Zeitschrift für Polymere 1972, Bd. 250, Seiten 782-796, bestimmt wurden. Die Ultrazentrifugenmessung liefert die integrale Massenverteilung des Teilchendurchmessers einer Probe. Hieraus lässt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert.

Ein weiteres wichtiges Merkmal für Polymerzusammensetzungen sind die viskositätsbezogenen K-Werte, wie sie von H. Fikentscher in Cellulosechemie 1932, 13, Seiten 58-64 und 71-74 beschrieben wurden.

Die folgenden Beispiele sollen die Erfindung erläutern, ohne sie jedoch einzuschränken.

Die Bestimmung des mittleren Teilchendurchmessers des Polymerisates erfolgte durch quasielektrische Lichtstreuung nach ISO 13321 mit einem Malvern Autosizer 2C an 0,01 gew.-%igen Proben. Die Lichtdurchlässigkeit wurde an 0,01 gew.-%igen Proben bei einer Küvettenlänge von 2,5 cm gegen reines Wasser als Referenz bestimmt. Die Bestimmung der Glasübergangstemperatur erfolgte mittels DSC nach der midpoint Methode. Die Bestimmung restflüchtiger Anteile erfolgte durch gaschromatographische Analyse. Die Bestimmung der K-Werte erfolgte nach H. Fikentscher (s.o.) und wurden bei Verwendung von N-Vinylpyrrolidon in 1 gew.-%igen wässrigen Lösungen und bei Verwendung von Acrylaten in 1 gew.-%igen ethanolischen Lösungen bei jeweils 25 °C gemessen. Die Molmassen wurden durch Gelpermeationschromatographie in Tetrahydrofuran als Zahlenmittel bestimmt. Als Eichstandard wurde Polystyrol verwendet.

Beispiel 1

Emulsionspolymerisation eines Styrol-Butadien-Acrylsäure Polymers

In einem Polymerisationsgefäß legte man 300 g Wasser, 62 g einer 33 gew.-%igen Polymersaat (Polystyrollatex, $d_{50}$ 30 nm) und 10 % der Initiatorlösung (Zulauf 2) vor und erwärmte auf 95 °C.

Dann gab man über zwei getrennte Zuläufe zeitgleich beginnend innerhalb von 2,5 h die Monomeremulsion (Zulauf 1) und die Restmenge der Initiatorlösung unter Beibehaltung der Temperatur in das Polymerisationsgefäß. Nach Beendigung der Monomerzugabe kühlte man auf 70 °C, gab dann innerhalb von 2 h zeitgleich beginnend eine wässrige Lösung von 4 g tert.-Butylhydroperoxid in 40 g Wasser sowie eine Lösung von 1,7 g Aceton und 2,8 g Natriumdisulfit in 38 g Wasser unter Beibehaltung der Temperatur zu. Anschließend gab man 22 g einer 25 gew.-%igen Natronlauge zu und kühlte auf Raumtemperatur ab.

Zulauf 1:

| | |
|---|---|
| 400 g | entionisiertes Wasser |
| 33 g | Emulgatorlösung |
| 0,8 g | 1-Benzyl-2,5-cyclohexadien-1-carbonsäure |
| 675 g | Styrol |
| 310 g | Butadien |
| 30 g | Acrylsäure |
| 10 g | 25 gew.-%ige wässrige Natronlauge |

Zulauf 2:

| | |
|---|---|
| 10,2 g | Natriumperoxodisulfat in 200 g Wasser |

Emulgatorlösung: Mischung aus 3 Gew.-Teilen einer wässrigen, 45 gew.%igen Lösung des Natriumsalzes des disulfonierten Monododecyldiphenylethers (DOWFAX® 2A1, Dow Chemical) und 7 Gew.-Teilen einer wässrigen, 15 gew.-%igen Natriumdodecylbenzolsulfonat-Lösung.

Der Feststoffgehalt der Dispersion lag bei etwa 50 Gew.-%. Die Lichtdurchlässigkeit betrug 70 %. Die gewichtsmittlere Teilchengröße lag bei 124 nm. Der pH-Wert lag bei 6,8, und die Glasübergangstemperatur betrug 27 °C. Der

Gelgehalt nach Extraktion mit THF betrug 85 %.

Vergleichsbeispiel 1

In einem Polymerisationsgefäß legte man 300 g Wasser, 62 g einer 33 gew.-%igen Polymersaat (Polystyrollatex, $d_{50}$ 30 nm) und 10 % der Initiatorlösung (Zulauf 2) vor und erwärmte auf 95 °C.

Dann gab man über zwei getrennte Zuläufe zeitgleich beginnend innerhalb von 2,5 h die Monomeremulsion (Zulauf 1) und die Restmenge der Initiatorlösung unter Beibehaltung der Temperatur in das Polymerisationsgefäß. Nach Beendigung der Monomerzugabe kühlte man auf 70 °C, gab dann innerhalb von 2 h zeitgleich beginnend eine wässrige Lösung von 4 g tert.-Butylhydroperoxid in 40 g Wasser sowie eine Lösung von 1,7 g Aceton und 2,8 g Natriumdisulfit in 38 g Wasser unter Beibehaltung der Temperatur zu. Anschließend gab man 22 g einer 25 gew.-%igen Natronlauge zu und kühlte auf Raumtemperatur ab.

| Zulauf 1: | |
|---|---|
| 400 g | entionisiertes Wasser |
| 33 g | Emulgatorlösung (siehe Beispiel 1) |
| 675 g | Styrol |
| 310 g | Butadien |
| 30 g | Acrylsäure |
| 10 g | 25 gew.-%ige wässrige Natronlauge |

| Zulauf 2: | |
|---|---|
| 10,2 g | Natriumperoxodisulfat in 200 g Wasser |

Der Feststoffgehalt der Dispersion lag bei etwa 50 Gew.-%. Die Lichtdurchlässigkeit betrug 69 %. Die gewichtsmittlere Teilchengröße lag bei 126 nm. Der pH-Wert lag bei 6,7, und die Glasübergangstemperatur betrug 27 °C. Der Gelgehalt nach Extraktion mit THF betrug 93 %.

Beipiel 2

Bulkpolymerisation von Styrol

Ein Rundkolben wurde mit 148,5 g Styrol beschickt und mit Stickstoff gespült. Der Reaktionsansatz wurde auf 80 °C erwärmt, anschließend gab man 0,068 g Porofor® N (Fa. Akzo) und 0,25 g 1-Methyl-2,5-cyclohexadien-1-carbonsäuremethylester zu. Die Lösung wurde zwei Stunden bei 80 °C gerührt und dann auf Raumtemperatur abgekühlt.

Der Feststoffgehalt lag bei 30 Gew.-%. Das zahlenmittlere Molekulargewicht betrug 127 000 g/mol.

Vergleichsbeispiel 2

Ein Rundkolben wurde mit 148,5 g Styrol beschickt und mit Stickstoff gespült. Der Reaktionsansatz wurde auf 80 °C erwärmt, anschließend gab man 0,068 g Porofor® N (Fa. Akzo) zu. Die Lösung wurde zwei Stunden bei 80°C gerührt und dann auf Raumtemperatur abgekühlt.

Der Feststoffgehalt lag bei 29 Gew.-%. Das zahlenmittlere Molekulargewicht betrug 155 500 g/mol.

Beispiel 3

Emulsionspolymerisation eines Ethylacrylat-Methacrylsäure Polymers

372 g Wasser, 1 g Natriumlaurylsulfat und 35 g der Monomerlösung (Zulauf 1) wurden vorgelegt und auf 80 °C erwärmt. Bei 40°C wurden 8 g einer 7 gew.-% wässrigen Lösung von Natriumpersulfat zugegeben. Nach Erreichen der Polymerisationstemperatur wurde die Restmenge der Monomerlösung innerhalb von 2 h zugegeben und anschließend eine 1 h nachpolymerisiert.

| Zulauf 1: | |
|---|---|
| 200 g | vollentionisiertes Wasser |
| 15 g | 15 gew.%igen wässrigen Lösung von Natriumlaurylsulfat |

(fortgesetzt)

Zulauf 1:

| | |
|---|---|
| 280 g | Ethylacrylat |
| 70 g | Methacrylsäure |
| 0,37 g | 1-Methyl-2,5-cyclohexadien-1-carbonsäuremethylester |

Der Feststoffgehalt der Dispersion lag bei ca. 38 %. Die Teilchengröße betrug 142 nm. Der K-Wert des Polymers gemessen in Ethanol betrug 54.

Vergleichsbeispiel 3

372 g Wasser, 1 g Natriumlaurylsulfat und 35 g der Monomerlösung (Zulauf 1) wurden vorgelegt und auf 80 °C erwärmt. Bei 40 °C wurden 8 g einer 7 gew.-% wässrigen Lösung von Natriumpersulfat zugegeben. Nach Erreichen der Polymerisationstemperatur wurde die Restmenge der Monomerlösung innerhalb von 2 h zugegeben und anschließend eine 1 h nachpolymerisiert.

Zulauf 1:

| | |
|---|---|
| 200 g | vollentionisiertes Wasser |
| 15 g | 15 gew.-%igen wässrigen Lösung von Natriumlaurylsulfat |
| 280 g | Ethylacrylat |
| 70 g | Methacrylsäure |

Der Feststoffgehalt der Dispersion lag bei ca. 38 %. Die Teilchengröße betrug 145 nm. Der K-Wert des Polymers gemessen in Ethanol betrug 89.

Beispiel 4

Lösungspolymerisation von N-Vinylpyrrolidon

Zu einer Vorlage von 50 g Wasser wurden bei 75 °C zeitgleich beginnend innerhalb von 2 h die Lösungen aus Zulauf 1 und Zulauf 2 zugegeben. Anschließend wurde 1 h nachpolymerisiert.

Zulauf 1:

| | |
|---|---|
| 50 g | N-Vinylpyrrolidon |
| 150 g | vollentionisiertes Wasser |
| 0,43 g | 1-Isopropyl- 2,5-Cyclohexadien-1-carbonsäure |

Zulauf 2:

| | |
|---|---|
| 0,15 g | Wako® V-50 |
| 83 g | vollentionisiertes Wasser |

Der Feststoffgehalt der Lösung lag bei 16 %. Der K-Wert des Polymers gemessen in Ethanol betrug 61.

Vergleichsbeispiel 4

Zu einer Vorlage von 50 g Wasser wurden bei 75 °C zeitgleich beginnend innerhalb von 2 h die Lösungen aus Zulauf 1 und Zulauf 2 zugegeben. Anschließend wurde 1 h nachpolymerisiert.

Zulauf 1:

| | |
|---|---|
| 50 g | N-Vinylpyrrolidon |
| 150 g | vollentionisiertes Wasser |

(fortgesetzt)

| | |
|---|---|
| Zulauf 2: | |
| 0,15 g | Wako® V-50 |
| 83 g | vollentionisiertes Wasser |

Der Feststoffgehalt der Lösung lag bei 15 %. Der K-Wert des Polymers gemessen in Ethanol betrug 67.

## Patentansprüche

1. Verfahren zur radikalischen Polymerisation in Gegenwart eines Reglers, **dadurch gekennzeichnet, dass** man als Regler carbocyclische oder heterocyclische Verbindungen verwendet, die eine in Allyl- oder Heteroallylstellung beziehungsweise Homoallyl- oder Homoheteroallylstellung befindliche Abgangsgruppe enthalten, wobei diese Verbindungen nach radikalischer Wasserstoff-Abstraktion ein aromatisches System unter Abspaltung einer radikalischen Abgangsgruppe ausbilden.

2. Verfahren nach Anspruch 1, **dadurch gekennzeichnet, dass** sich als aromatisches System ein gegebenenfalls substituiertes Phenyl, Pyridin, Pyridazin, Pyrimidin, Pyrazin, Pyran, Thiopyran, Pyrrol, Pyrazol, Imidazol, Furan, Oxazol, Isoxazol, Thiophen, Thiazol oder Isothiazol ausbildet.

3. Verfahren nach Anspruch 1, **dadurch gekennzeichnet, dass** als Abgangsgruppe eine Carbonsäureester-, Silyl-, Sulfonyl-, Aryl-, Benzyl-, Allyl- oder Alkylgruppe vorliegt.

4. Verfahren nach den Ansprüchen 1 bis 3, **dadurch gekennzeichnet, dass** man als Regler mindestens eine Verbindung unter den Formeln (I), (II), (III) oder (IV)

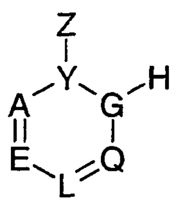
(I)

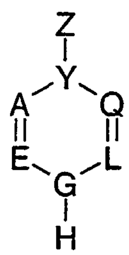
(II)

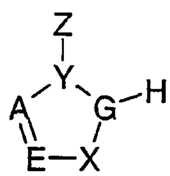
(III)

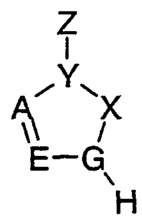
(IV)

auswählt, worin

A C-$R^1$, N,
E C-$R^2$, N,
L C-$R^3$, N,
Q C-$R^4$, N,
mit $R^1$-$R^4$ unabhängig voneinander Wasserstoff, $C_1$-$C_{10}$-Alkyl, $C_1$-$C_{10}$-Alkoxy, $C_1$-$C_{10}$-Alkylamino, $C_2$-$C_{20}$-Dialkylamino, $C_1$-$C_{10}$-Alkylcarbonyl, $C_1$-$C_{10}$-Alkylsulfonyl, $C_2$-$C_{10}$-Alkenyl, $C_2$-$C_{10}$-Alkinyl, worin mindestens zwei der Reste $R^1$-$R^4$ miteinander zu einem 3- bis 8-gliedrigen Ring verbunden sein können,
G C-$R^5$, N,
mit $R^5$ Wasserstoff, $C_1$-$C_{10}$-Alkyl,
X O, N-$R^6$, S,
mit $R^6$ Wasserstoff, $C_1$-$C_{10}$-Alkoxy, $C_1$-$C_{10}$-Alkylamino, $C_2$-$C_{20}$-Dialkylamino, $C_1$-$C_{10}$-Alkylcarbonyl, $C_1$-$C_{10}$-Alkylsulfonyl,
Y C-$R^7$, N,
mit $R^7$ Wasserstoff, Carboxyl, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl,

$C_1$-$C_{10}$-Alkylaminocarbonyl, $C_2$-$C_{20}$-Dialkylaminocarbonyl, $C_1$-$C_{10}$-Alkylcarbonyloxy, $C_1$-$C_{10}$-Alkylcarbonylamino, $C_1$-$C_{10}$-Alkylsulfonyl, $C_1$-$C_{10}$-Alkoxysulfonyl, $C_1$-$C_{10}$-Alkylaminosulfonyl, $C_2$-$C_{20}$-Dialkylaminosulfonyl, $C_1$-$C_{10}$-Acyl, $C_2$-$C_{10}$-Alkenyl, $C_3$-$C_{10}$-Alkenyloxy, $C_2$-$C_{10}$-Alkenylcarbonyl, $C_3$-$C_{10}$-Alkenyloxycarbonyl, $C_3$-$C_{10}$-Alkenylaminocarbonyl, $C_2$-$C_{10}$-Alkenylcarbonyloxy, $C_2$-$C_{10}$-Alkenylcarbonylamino, $C_2$-$C_{10}$-Alkenylsulfonyl, $C_3$-$C_{10}$-Alkenyloxysulfonyl, $C_3$-$C_{10}$-Alkenylaminosulfonyl, $C_2$-$C_{10}$-Alkinyl, $C_3$-$C_{10}$-Alkinyloxy, $C_2$-$C_{10}$-Alkinylcarbonyl, $C_3$-$C_{10}$-Alkinyloxycarbonyl, $C_3$-$C_{10}$-Alkinylaminocarbonyl, $C_2$-$C_{10}$-Alkinylcarbonyloxy, $C_2$-$C_{10}$-Alkinylcarbonylamino, $C_2$-$C_{10}$-Alkinylsulfonyl, $C_3$-$C_{10}$-Alkinyloxysulfonyl, $C_3$-$C_{10}$-Alkinylaminosulfonyl, $C_3$-$C_{12}$-Cycloalkyl, $C_3$-$C_{12}$-Cycloalkoxy, $C_3$-$C_{12}$-Cycloalkylcarbonyl, $C_3$-$C_{12}$-Cycloalkoxycarbonyl, $C_3$-$C_{12}$-Cycloalkylaminocarbonyl, $C_3$-$C_{12}$-Cycloalkylcarbonyloxy, $C_3$-$C_{12}$-Cycloalkylcarbonylamino, $C_3$-$C_{12}$-Cycloalkylsulfonyl, $C_3$-$C_{12}$-Cycloalkoxysulfonyl, $C_3$-$C_{12}$-Cycloalkylaminosulfonyl, Aryl, Aryloxy, Arylcarbonyl, Aryloxycarbonyl, Arylaminocarbonyl, Arylcarbonyloxy, Arylcarbonylamino, Arylsulfonyl, Aryloxysulfonyl, Arylaminosulfonyl,

Z $COOR^8$, $SiR^9R^{10}R^{11}$, $SO_2R^{12}$, Aryl, gegebenfalls substituiertes Benzyl, $C_3$-$C_{10}$-2-Alken-1-yl, $R^{13}$

mit $R^8$, $R^{13}$ $C_1$-$C_{10}$alkyl,

$R^9$-$R^{11}$ unabhängig voneinander Wasserstoff, $C_1$-$C_{10}$-Alkyl, worin zwei der Reste $R^9$-$R^{11}$ miteinander zu einem 3- bis 8-gliedrigen Ring verbunden sein können,

$R^{12}$ Wasserstoff, $C_1$-$C_{10}$Alkyl,

bedeuten, mit der Maßgabe, dass maximal 2 Heteroatome im Ring der heterocyclischen Verbindung sind.

**5.** Verfahren nach den Ansprüchen 1 bis 4, **dadurch gekennzeichnet, dass** man als Regler gegebenfalls mit $C_1$-$C_4$-Alkylresten als $R^7$ substituierte Cyclohexadiencarbonsäure, Cyclohexadiencarbonsäuremethylester, Cyclohexadiencarbonsäureethylester, Dihydrofurancarbonsäure, Dihydrofurancarbonsäuremethylester und/oder Dihydrofurancarbonsäureethylester einsetzt.

**6.** Verfahren nach den Ansprüchen 1 bis 5, **dadurch gekennzeichnet, dass** man als Regler 1 - Methyl-2,5-cyclohexadien-1-carbonsäuremethylester, 1-iso-Propyl-2,5-cyclohexadien-1-carbonsäure, 1-tert.-Butyl-2,5-cyclohexadien-1-carbonsäure, 1-Benzyl-2,5-cyclohexadien-1-carbonsäure, 1-Allyl-2,5-cyclohexadien-1-carbonsäure und/oder 1-Cyanomethyl-2,5-cyclohexadien-1-carbonsäure einsetzt.

**7.** Verfahren nach den Ansprüchen 1 bis 6, **dadurch gekennzeichnet, dass** man 0,01 bis 5 Gew.-% Regler bezogen auf die Gesamtmenge an Monomeren einsetzt.

**8.** Verfahren nach Ansprüchen 1 bis 7, **dadurch gekennzeichnet, dass** man den Regler in Emulsions-, Mikroemulsions-, Miniemulsions-, Suspensions-, Mikrosuspensions, Minisuspensions-, Fällungs-, Masse- und/oder in Lösungspolymerisationen einsetzt.

**9.** Verfahren nach den Ansprüchen 1 bis 8, **dadurch gekennzeichnet, dass** man Homo- und/oder Copolymerisate herstellt.

**10.** Verfahren nach den Ansprüchen 1 bis 9, **dadurch gekennzeichnet, dass** man als radikalisch polymerisierbare Monomere monoethylenisch ungesättigte $C_3$-$C_6$-Carbonsäuren, $C_1$-$C_{20}$-(Meth)acrylsäureester, -amide und -nitrile, Vinylester von bis zu 20 C-Atomen enthaltenden Carbonsäuren, Vinylaromaten mit bis zu 20 C-Atomen, Vinylhalogenide, Vinylether von 1 bis 10 C-Atome enthaltenden Alkoholen, aliphatische gegebenfalls halogenierte Kohlenwasserstoffe mit 2 bis 8 C-Atomen und 1 oder 2 Doppelbindungen, offenkettige N-Vinylamidverbindungen, Vinylidene oder Mischungen dieser Monomere einsetzt.

**11.** Verwendung von den Verbindungen der Formeln (I), (II), (III) oder (IV) gemäß Anspruch 3 als Regler für radikalische Polymerisationsreaktionen.

## Claims

**1.** A process for free-radical polymerization in the presence of a regulator, which comprises using, as regulator, carbocyclic or heterocyclic compounds which comprise a leaving group in the allyl or heteroallyl position, or homoallyl or homoheteroallyl position, respectively, where these compounds, following free-radical hydrogen abstraction, form an aromatic system with elimination of a free-radical leaving group.

2. The process according to claim 1, wherein the aromatic system which forms is an optionally substituted phenyl, pyridine, pyridazine, pyrimidine, pyrazine, pyran, thiopyran, pyrrole, pyrazole, imidazole, furan, oxazole, isoxazole, thiophene, thiazol or isothiazol.

3. The process according to claim 1, wherein the leaving group is a carboxylate, silyl, sulfonyl, aryl, benzyl, allyl or alkyl group.

4. The process according to claims 1 to 3, wherein the regulator chosen is at least one compound from the formulae (I), (II), (III) or (IV)

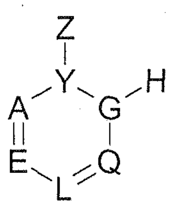
(I)

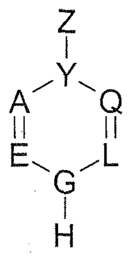
(II)

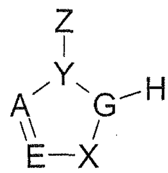
(III)

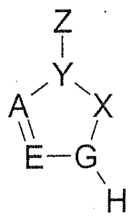
(IV)

in which

A is C-$R^1$, N,
E is C-$R^2$, N,
L is C-$R^3$, N,
Q is C-$R^4$, N,
where $R^1$-$R^4$ independently of one another are hydrogen, $C_1$-$C_{10}$-alkyl, $C_1$-$C_{10}$-alkoxy, $C_1$-$C_{10}$-alkylamino; $C_2$-$C_{20}$-dialkylamino, $C_1$-$C_{10}$-alkylcarbonyl, $C_1$-$C_{10}$-alkylsulfonyl, $C_2$-$C_{10}$-alkenyl, $C_2$-$C_{10}$-alkynyl, in which at least two of the radicals $R^1$-$R^4$ may be joined together to give a 3- to 8-membered ring,
G is C-$R^5$, N,
where $R^5$ is hydrogen, $C_1$-$C_{10}$-alkyl,
X is O, N-$R^6$, S,
where $R^6$ is hydrogen, $C_1$-$C_{10}$-alkoxy, $C_1$-$C_{10}$-alkylamino, $C_2$-$C_{20}$-dialkylamino, $C_1$-$C_{10}$-alkylcarbonyl, $C_1$-$C_{10}$-alkylsulfonyl,
Y is C-$R^7$, N,
where $R^7$ is hydrogen, carboxyl, $C_1$-$C_{10}$-alkyl, $C_1$-$C_{10}$-alkoxy, $C_1$-$C_{10}$-alkylcarbonyl, $C_1$-$C_{10}$-alkoxycarbonyl, $C_1$-$C_{10}$-alkylaminocarbonyl, $C_2$-$C_{20}$-dialkylaminocarbonyl, $C_1$-$C_{10}$-alkylcarbonyloxy, $C_1$-$C_{10}$-alkylcarbonylamino, $C_1$-$C_{10}$-alkylsulfonyl, $C_1$-$C_{10}$-alkoxysulfonyl, $C_1$-$C_{10}$-alkylaminosulfonyl, $C_2$-$C_{20}$-dialkylaminosulfonyl, $C_1$-$C_{10}$-acyl, $C_2$-$C_{10}$-alkenyl, $C_3$-$C_{10}$-alkenyloxy, $C_2$-$C_{10}$-alkenylcarbonyl, $C_3$-$C_{10}$-alkenyfoxycarbonyl, $C_3$-$C_{10}$-alkenylaminocarbonyl, $C_2$-$C_{10}$-alkenylcarbonyloxy, $C_2$-$C_{10}$-alkenylcarbonylamino, $C_2$-$C_{10}$-alkenylsulfonyl, $C_3$-$C_{10}$-alkenyloxysulfonyl, $C_3$-$C_{10}$-alkenylaminosulfonyl, $C_2$-$C_{10}$-alkynyl, $C_3$-$C_{10}$-alkynyloxy, $C_2$-$C_{10}$-alkynylcarbonyl, $C_3$-$C_{10}$-alkynyloxycarbonyl, $C_3$-$C_{10}$-alkynylaminocarbonyl, $C_2$-$C_{10}$-alkynylcarbonyloxy, $C_2$-$C_{10}$-alkynylcarbonylamino, $C_2$-$C_{10}$-alkynylsulfonyl, $C_3$-$C_{10}$-alkynyloxysulfonyl; $C_3$-$C_{10}$-alkynylaminosulfonyl, $C_3$-$C_{12}$-cycloalkyl, $C_3$-$C_{12}$-cycloalkoxy, $C_3$-$C_{12}$-cycloalkylcarbonyl, $C_3$-$C_{12}$-cycloalkoxycarbonyl, $C_3$-$C_{12}$-cycloalkylaminocarbonyl, $C_3$-$C_{12}$-cycloalkylcarbonyloxy, $C_3$-$C_{12}$-cycloalkylcarbonylamino, $C_3$-$C_{12}$-cycloalkylsulfonyl, $C_3$-$C_{12}$-cycloalkoxysulfonyl, $C_3$-$C_{12}$-cycloalkylaminosulfonyl, aryl, aryloxy, arylcarbonyl, aryloxycarbonyl, arylaminocarbonyl, arylcarbonyloxy, arylcarbonylamino, arylsulfonyl, aryloxysulfonyl, arylaminosulfonyl,
Z is $COOR^8$, $SiR^9R^{10}R11$, $SO_2R^{12}$, aryl, optionally substituted benzyl, $C_3$-$C_{10}$-2-alken-1-yl, $R^{13}$
where $R^8$, $R^{13}$ are $C_1$-$C_{10}$-alkyl,
$R^9$-$R^{11}$ independently of one another are hydrogen, $C_1$-$C_{10}$-alkyl, in which two of the radicals $R^9$-$R^{11}$ may be joined together to give a 3- to 8-membered ring,
$R^{12}$ is hydrogen, $C_1$-$C_{10}$-alkyl,

with the proviso that a maximum of 2 heteroatoms are in the ring of the heterocyclic compound.

**5.** The process according to claims 1 to 4, wherein the regulator used is cyclohexadienecarboxylic acid optionally substituted by $C_1$-$C_4$-alkyl radicals as $R^7$, methyl cyclohexadienecarboxylate, ethyl cyclohexadienecarboxylate, dihydrofurancarboxylic acid, methyl dihydrofurancarboxylate and/or ethyl dihydrofurancarboxylate.

**6.** The process according to claims 1 to 5, wherein the regulator used is methyl 1-methyl-2,5-cyclohexadiene-1-carboxylate, 1-isopropyl-2,5-cyclohexadiene-1-carboxylic acid, 1-tert-butyl-2,5-cyclohexadiene-1-carboxylic acid, 1-benzyl-2,5-cyclohexadiene-1-carboxylic acid, 1-allyl-2,5-cyclohexadiene-1-carboxylic acid and/or 1 -cyanomethyl-2,5-cyclohexadiene-1 - carboxylic acid.

**7.** The process according to claims 1 to 6, wherein 0.01 to 5% by weight of regulator, based on the total amount of monomers, is used.

**8.** The process according to claims 1 to 7, wherein the regulator is used in emulsion, micro emulsion, miniemulsion, suspension, microsuspension, minisuspension, precipitation, bulk and/or in solution polymerizations.

**9.** The process according to claims 1 to 8, wherein homopolymers and/or copolymers are prepared.

**10.** The process according to claims 1 to 9, wherein the free-radically polymerizable monomers used are monoethylenically unsaturated $C_3$-$C_6$-carboxylic acids, $C_1$-$C_{20}$-(meth)acrylic esters, amides and nitriles, vinyl esters of carboxylic acids comprising up to 20 carbon atoms, vinylaromatics having up to 20 carbon atoms, vinyl halides, vinyl ethers of alcohols comprising 1 to 10 carbon atoms, aliphatic optionally halogenated hydrocarbons having 2 to 8 carbon atoms and 1 or 2 double bonds, open-chain N-vinylamide compounds, vinylidenes or mixtures of these monomers.

**11.** The use of the compounds of the formulae (I), (II), (III) or (IV) according to claim 3 as regulators for free-radical polymerization reactions.

## Revendications

**1.** Procédé de polymérisation radicalaire en présence d'un régulateur, **caractérisé en ce qu'**on utilise, comme régulateur, des composés carbocycliques ou hétérocycliques qui contiennent un groupe partant situé en position allyle ou hétéroallyle ou respectivement homoallyle ou homohétéroallyle, ces composés réalisant, après abstraction d'hydrogène radicalaire, un système aromatique avec élimination d'un groupe partant radicalaire.

**2.** Procédé suivant la revendication 1, **caractérisé en ce que**, comme système aromatique, il se forme du phényle, de la pyridine, de la pyridazine, de la pyrimidine, de la pyrazine, du pyranne, du thiopyranne, du pyrrole, du pyrazole, de l'imidazole, du furanne, de l'oxazole, de l'isoxazole, du thiophène, du thiazole ou de l'isothiazole, éventuellement substitués.

**3.** Procédé suivant la revendication 1, **caractérisé en ce que** le groupe partant est un groupe ester d'acide carboxylique, silyle, sulfonyle, aryle, benzyle, allyle ou alkyle.

**4.** Procédé suivant les revendications 1 à 3, **caractérisé en ce que**, comme régulateur, on choisit au moins un composé parmi les formules (I), (II), (III) ou (IV) :

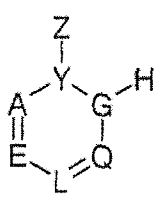

(I)

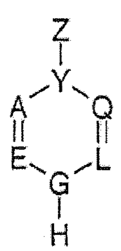

(II)

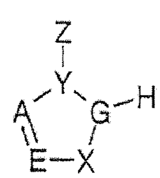

(III)

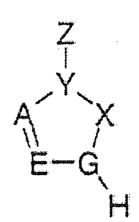

(IV)

dans lesquelles

A représente $C-R^1$, N,
E représente $C-R^2$, N,
L représente $C-R^3$, N,
Q représente $C-R^4$, N,
où $R^1$-$R^4$ représentent indépendamment l'un de l'autre de l'hydrogène ou un groupe alkyle en $C_1$-$C_{10}$, alcoxy en $C_1$-$C_{10}$, alkylamino en $C_1$-$C_{10}$, dialkylamino en $C_2$-$C_{20}$, $C_1$-$C_{10}$-alkylcarbonyle, alkylsulfonyle en $C_1$-$C_{10}$, alcényle en $C_2$-$C_{10}$, alcynyle en $C_2$-$C_{10}$, au moins deux des radicaux $R^1$-$R^4$ pouvant être reliés l'un à l'autre en un noyau à 3 jusqu'à 8 chaînons,
G représente $C-R^5$, N,
où $R^5$ est de l'hydrogène ou un groupe alkyle en $C_1$-$C_{10}$,
X représente O, $N-R^6$, S,
où $R^6$ est de l'hydrogéne ou un groupe alcoxy en $C_1$-$C_{10}$, alkylamino en $C_1$-$C_{10}$, dialkylamino en $C_2$-$C_{20}$, $C_1$-$C_{10}$-alkylcarbonyle, alkylsulfonyle en $C_1$-$C_{10}$,
Y représente $C-R^7$, N,
où $R^7$ représente de l'hydrogène ou un groupe carboxyle, $C_1$-$C_{10}$-alkyle, $C_1$-$C_{10}$-alcoxy, $C_1$-$C_{10}$-alkylcarbonyle, $C_1$-$C_{10}$-alcoxycarbonyle, $C_1$-$C_{10}$-alkylaminocarbonyle, $C_2$-$C_{20}$-dialkylaminocarbonyle, $C_1$-$C_{10}$-alkylcarbonyloxy, $C_1$-$C_{10}$-alkylcarbonylamino, $C_1$-$C_{10}$-alkylsulfonyle, $C_1$-$C_{10}$-alcoxysulfonyle, $C_1$-$C_{10}$-alkylaminosulfonyle, $C_2$-$C_{20}$-dialkylaminosulfonyle, $C_1$-$C_{10}$-acyle, $C_2$-$C_{10}$-alcényle, $C_3$-$C_{10}$-alcényloxy, $C_2$-$C_{10}$-alcénylcarbonyle, $C_3$-$C_{10}$-alcényloxycarbonyle, $C_3$-$C_{10}$-alcénylaminocarbonyle, $C_2$-$C_{10}$-alcénylcarbonyloxy, $C_2$-$C_{10}$-alcénylcarbonylamino, $C_2$- $C_{10}$-alcénylsulfonyle, $C_3$-$C_{10}$-alcényloxysulfonyle, $C_3$-$C_{10}$-alcénylaminosulfonyle, $C_2$-$C_{10}$-alcynyle, $C_3$-$C_{10}$-alcynyloxy, $C_2$-$C_{10}$-alcynylcarbonyle, $C_3$- $C_{10}$-alcynyloxycarbonyle, $C_3$-$C_{10}$-alcynylaminocarbonyle, $C_2$-$C_{10}$-alcynylcarbonyloxy, $C_2$-$C_{10}$-alcynylcarbonylamino, $C_2$-$C_{10}$-alcynylsulfonyle, $C_3$-$C_{10}$-alcynyloxysul-fonyle, $C_3$-$C_{10}$-alcynylaminosulfonyle, $C_3$-$C_{12}$-cycloalkyle, $C_3$-$C_{12}$-cycloalcoxy, $C_3$-$C_{12}$-cycloalkylcarbonyle, $C_3$-$C_{12}$-cycloalcoxycarbonyle, $C_3$-$C_{12}$-cycloalkylaminocarbonyle, $C_3$-$C_{12}$-cycloalkylcarbonyloxy, $C_3$-$C_{12}$-cycloalkylcarbonylamino, $C_3$-$C_{12}$-cycloalkylsulfonyle, $C_3$-$C_{12}$-cycloalcoxysulfonyle, $C_3$-$C_{12}$-cycloalkylaminosulfonyle, aryle, aryloxy, arylcarbonyle, aryloxycarbonyle, arylaminocarbonyle, arylcarbonyloxy, arylcarbonylamino, arylsulfonyle, aryloxysulfonyle, arylaminosulfonyle,
Z représente un groupe $COOR^8$, $SiR^9R^{10}R^{11}$, $SO_2R^{12}$, aryle, benzyle éventuellement substitué, $C_3$-$C_{10}$-2-alcén-1-yle, $R^{13}$,
où $R^8$, $R^{13}$ représentent un groupe alkyle en $C_1$-$C_{10}$,
$R^9$-$R^{11}$ représentent indépendamment l'un de l'autre de l'hydrogène ou un groupe alkyle en $C_1$-$C_{10}$, dans lequel deux des radicaux $R^9$-$R^{11}$ peuvent être reliés l'un à l'autre en un noyau à 3 jusqu'à 8 chaînons,
$R^{12}$ représente de l'hydrogène ou un groupe alkyle en $C_1$-$C_{10}$,

à la condition qu'au maximum 2 hétéroatomes soient dans le noyau du composé hétérocyclique.

5. Procédé suivant les revendications 1 à 4, **caractérisé en ce que**, comme régulateur, on met en oeuvre des esters éthyliques d'acide dihydrofurannecarboxylique, des esters méthyliques d'acide dihydrofurannecarboxylique, de l'acide dihydrofurannecarboxylique, des esters éthyliques d'acide cyclohexadiènecarboxylique, des esters méthyliques d'acide cyclohexadiènecarboxylique, et/ou de l'acide cyclohexadiènecarboxylique, éventuellement substitués par des radicaux alkyle en $C_1$-$C_4$ comme $R^7$.

6. Procédé suivant les revendications 1 à 5, **caractérisé en ce que**, comme régulateur, on met en oeuvre de l'ester méthylique d'acide 1-méthyl-2,5-cyclohexadiène-1-carboxylique, de l'acide 1-isopropyl-2,5-cyclohexadiène-1-carboxylique, de l'acide 1-tert-butyl-2,5-cyclohexadiène-1-carboxylique, de l'acide 1-benzyl-2,5-cyclohexadiène-1-carboxylique, de l'acide 1-allyl-2,5-cyclohexadiène-1-carboxylique et/ou de l'acide 1-cyanométhyl-2,5-cyclohexadiène-1-carboxylique.

7. Procédé suivant les revendications 1 à 6, **caractérisé en ce qu'**on met en oeuvre 0,01 à 5 % en poids de régulateur par rapport à la quantité totale de monomères.

8. Procédé suivant les revendications 1 à 7, **caractérisé en ce qu'**on met en oeuvre le régulateur dans des polymérisations en émulsion, microémulsion, miniémulsion, suspension, microsuspension, minisuspension, précipitation, masse et/ou solution.

9. Procédé suivant les revendications 1 à 8, **caractérisé en ce qu'**on prépare des homopolymères et/ou des copolymères.

**10.** Procédé suivant les revendications 1 à 9, **caractérisé en ce que**, comme monomères polymérisables par voie radicalaire, on met en oeuvre des acides carboxyliques en $C_3$-$C_6$ monoéthyléniquement insaturés, des esters, amides et nitriles d'acide (méth) acrylique en $C_1$-$C_{20}$, des esters vinyliques d'acides carboxyliques contenant jusqu'à 20 atomes de C, des substances vinyl-aromatiques comportant jusqu'à 20 atomes de C, des halogénures de vinyle, des éthers vinyliques d'alcools contenant 1 à 10 atomes de C, des hydrocarbures aliphatiques éventuellement halogénés comportant 2 à 8 atomes de C et une ou deux doubles liaisons, des composés N-vinylamide à chaîne ouverte, des vinylidènes ou des mélanges de ces monomères.

**11.** Utilisation des composés des formules (I), (II), (III) ou (IV) suivant la revendication 3 comme régulateurs pour des réactions de polymérisation radicalaire.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19512999 A
- EP 407059 A
- WO 10148497 A
- EP 036136 A
- EP 496925 A
- DE 10041211 A
- EP 40419 B
- EP 614922 A
- EP 657812 A
- US 3615972 A


### In der Beschreibung aufgeführte Nicht-Patentliteratur


- Ullmanns Encyclopedia of Industrial Chemistry. CD-ROM, Synthetic Rubber 2.1.2
- **WALTON et al.** *J. Chem. Soc., Perkin Trans.,* 1997, vol. 2, 757-762
- **LEHRT WALTON.** *J. Chem. Soc., Perkin Trans.,* 1998, vol. 2, 1423-1429
- *Angew. Chem.,* 2000, vol. 29-17, 3080-3082
- **WALTON.** *J. Chem. Soc., Chem. Commun.,* 1995, 27-28
- Encyclopedia of Polymer Science and Technology. John Wiley & Sons Inc, 1966, vol. 5, 847
- **P. COVELL ; M. EL-ASSER.** Emulsion Polymerization and Emulsion Polymers. Verlag John Wiley, 1997, 699-722
- A Mechanistic Approach. **GILBERT.** Emulsion Polymerization. Academic Press, 1995, 12-14
- Encyclopedia of Polymer Science and Engineering. Verlag John Wiley, 1989, vol. 16, 488
- **T. G. FOX.** *Bull. Am. Phys. Soc.,* 1956, vol. II (1), 123
- **WEINHEIM.** Ullmann's Encyclopädie der technischen Chemie. Verlag Chemie, 1980, vol. 19, 18
- Ullmann's Encyclopedia of Industrial Chemistry. VCH Weinheim, 1992, vol. A21, 169
- **B. J. BRANDRUP ; E. H. IMMERGUT.** Polymer Handbook. J. Wiley, 1966
- **W. SCHOLTAN ; H. LANGE.** *Koolid-Zeitschrift & Zeitschrift für Polymere,* 1972, vol. 250, 782-796
- **H. FIKENTSCHER.** *Cellulosechemie,* 1932, vol. 13, 58-6471-74